# FASCICULE DE BREVET EUROPEEN

(11) **EP 3 328 633 B1**
(45) Date de publication et mention de la délivrance du brevet: **07.02.2024**
(21) Numéro de dépôt: 16741613.0
(22) Date de dépôt: 19.07.2016
(51) Int. Cl.: B32B 5/02, B32B 27/12, E04B 1/62

(54) **MEMBRANE PERMÉABLE AUTO-ADHÉSIVE ET PROCÉDÉ DE FABRICATION D'UNE TELLE MEMBRANE PERMÉABLE AUTO-ADHÉSIVE**
SELBSTKLEBENDE DURCHLÄSSIGE MEMBRAN UND VERFAHREN ZUR HERSTELLUNG SOLCH EINER SELBSTKLEBENDEN DURCHLÄSSIGEN MEMBRAN
SELF-ADHESIVE PERVIOUS MEMBRANE AND METHOD FOR MANUFACTURING SUCH A SELF-ADHESIVE PERVIOUS MEMBRANE

(30) Priorité: 31.07.2015 FR 1557428
(43) Date de publication de la demande: 06.06.2018
(73) Titulaire: ADHEX TECHNOLOGIES, 21300 Chenôve (FR)
(72) Inventeur: DURAND, Hervé, 21000 Dijon (FR); LLUCH, Hervé, 21700 Chaux (FR); GUILLEMET, Alain, 21121 Fontaine Les Dijon (FR)
(74) Mandataire: Gevers & Orès
(86) Numéro de dépôt international: PCT/EP2016/067184
(87) Numéro de publication internationale: WO 2017/021140

(56) Documents cités:
- EP-A1- 0 397 554
- WO-A1-2004/051019
- WO-A1-2004/082932
- WO-A1-2009/127819
- US-A1- 2016 230 392

## Description

### Domaine technique

La présente invention concerne une membrane auto-adhésive et perméable à l'air et à la vapeur d'eau et son procédé de fabrication. Une telle membrane est destinée au domaine de la construction des bâtiments et, plus particulièrement, destinée à être appliquée sur des murs et/ou des sous-toitures pour contrôler les flux de vapeur d'eau et d'air.

### Etat de la technique

Dans le domaine de la construction de bâtiment, il est bien connu que les problèmes d'humidité dans les murs sont attribués à deux principaux mécanismes, à savoir la diffusion de la vapeur d'eau et les fuites d'air. Les fuites d'air et la diffusion de la vapeur d'eau à travers les murs peuvent entraîner de nombreux désordres tels que l'effritement de la maçonnerie, le gel des tuyaux, la condensation et l'accumulation de glace dans des cavités, l'humidification des isolants, les rendant inopérants et la croissance de la moisissure notamment.

Le mouvement incontrôlé de l'air et de la vapeur d'eau à travers l'enveloppe du bâtiment est causé par des différences de pression produites par le vent. Les fuites d'air peuvent provenir de fissures ou de joints défectueux entre les éléments de construction et les éléments de structure ou à travers des matériaux poreux tels que les blocs de béton et les matériaux d'isolation poreux.

Afin de limiter ces problèmes d'humidité, il est usuel d'utiliser des films barrières ou pare-vapeur, comme un film de polyéthylène, pour contrôler le mouvement de la vapeur d'eau dans l'enveloppe du bâtiment. Le film pare-vapeur retarde la diffusion de l'eau à travers l'ensemble des matériaux dans les murs, la vitesse à laquelle la vapeur d'eau migre ou diffuse à travers un matériau dépendant de deux facteurs : la différence entre la pression de vapeur d'eau dans l'air à l'intérieur du bâtiment et la pression de vapeur d'eau dans l'air à l'extérieur du bâtiment et la résistance desmatériaux présents à la migration de l'eau par diffusion. Les films pare-vapeur procurent une plus grande résistance à la diffusion de vapeur d'eau que la plupart des autres matériaux. Ainsi, les films de polyéthylène d'une épaisseur suffisante sont les plus couramment utilisés à cette fin; Toutefois, d'autres matériaux tels que le papier d'aluminium ou certaines peintures ou adhésifs ont également été utilisés comme pare-vapeur.

Toutefois, ces films pare-vapeur ne sont pas suffisants et il est nécessaire d'y associer un film barrière à l'air afin d'éviter que l'air extérieur ne pénètre dans le bâtiment. En effet, de l'air chargé d'humidité passant à travers une cavité isolée avec un film pare-vapeur peut déposer beaucoup plus d'humidité que le pare-vapeur ne sera capable de diffuser dans le même laps de temps.

Ainsi, des films pare-air perméables à la vapeur d'eau ont été développés tels que les produits commercialisés sous la dénomination Blueskin ^{®} par la société américaine Bakor^{®} consistant en une membrane pare-air, perméable à la vapeur d'eau, hydrorésistante et auto-adhésive. Ces produits correspondent aux produits décrits dans le brevet américain US 6,901,712 déposé par la société Bakor^{®} qui décrit un film pare-air perméable à la vapeur d'eau constitué d'une feuille perméable à la vapeur d'eau, obtenu à partir de polyéthylène et de polyoléfines modifiées, sur une surface de laquelle est appliqué un adhésif en un film non continu.

Bien que ce type de film pare-vapeur ne nécessite pas de moyens de fixations pour fixer ledit film sur un mur ou similaire, l'adhésif de ces films n'est pas perméable à l'air et à la vapeur d'eau de sorte que cela limite la perméabilité à l'eau du film aux seules parties du film ne comportant pas d'adhésif.

Afin de remédier à cet inconvénient, on a déjà imaginé des films pare-vapeur comportant une couche continue d'adhésif sensible à la pression et perméable à la vapeur d'eau. C'est le cas notamment de la demande de brevet international WO 2009/127819 qui décrit une feuille membranaire perméable auto-adhésive, destinée à être utilisée dans une structure de bâtiment, qui comprend une couche continue d'un adhésif perméable sensible à la pression, attachée sur une surface d'une feuille membranaire perméable. Ladite feuille membranaire est constituée d'une structure laminaire comportant une couche de polypropylène filé-lié, une couche de polyester de type fusion-soufflage et une couche de polypropylène filé-lié et d'une couche d'adhésif sensible à la pression de base comprenant un agent de perméabilité à l'air incluant une résine absorbant l'eau, du polypropylène glycol et de l'eau et un agent de réticulation. On notera que, conformément aux enseignements de l'état de la technique, la couche d'adhésif sensible à la pression ne comporte pas de bulles d'air afin d'éviter une délamination comme il est décrit, notamment, dans les documents EP0670277 et EP2108687 notamment.

Ce type de film pare-vapeur présente néanmoins l'inconvénient d'être onéreux à fabriquer et de présenter une perméance qui se dégrade au cours du temps notamment. On entend par perméance l'aptitude d'une membrane ou d'une surface à laisser passer la vapeur d'eau.

Il existe donc un besoin pour un film pare-vapeur de conception simple et peu onéreuse procurant une bonne perméance constante dans le temps notamment.

### Divulguation de l'invention

L'un des buts de l'invention est donc de remédier à ces inconvénients en procurant un film pare-vapeur de conception simple et peu onéreuse procurant une bonne perméance constante dans le temps.

A cet effet et conformément à l'invention, il est proposé une membrane perméable à la vapeur d'eau auto-adhésive, destinée à être utilisé sur un bâtiment, comprenant un support perméable à l'air et à la vapeur d'eau et une couche adhésive sensible à la pression, perméable à l'air et à la vapeur d'eau, et solidaire de la face inférieure dudit support ; ladite membrane est remarquable en ce qu'elle comporte des bulles de gaz formant un tampon, qui sont emprisonnées entre le support et la couche adhésive.

On comprend bien que, contrairement aux membranes de l'art antérieur, la membrane suivant l'invention comporte une couche adhésive, continue, perméable à l'air et à la vapeur d'eau de composition simple et peu onéreuse, stable dans le temps, et procurant à l'ensemble de la membrane une perméance constante dans le temps.

De préférence, lesdites bulles de gaz présentent un diamètre inférieur à l'épaisseur de ladite couche adhésive.

Par ailleurs, de préférence, les bulles de gaz présentent un diamètre inférieur ou égal à 50 µm et la couche adhésive présente une épaisseur inférieure ou égale à 200 µm, et de préférence, une épaisseur de 130 µm.

De plus, la couche adhésive présente une masse surfacique comprise entre 100 et 160 g/m² et, de préférence, une masse surfacique de 130 g/m².

Ladite couche adhésive est de préférence obtenue dans un adhésif sensible à la pression polaire, de préférence réticulé, et de préférence acrylique.

De préférence, ledit adhésif est un adhésif acrylique hotmelt réticulé par UV et tackifié.

Par ailleurs, le support consiste en un film de polyéthylène (PE) micro-perforé, un film de polypropylène (PP) micro-perforé, un film copolymère polyéthylène(PE)/polypropylène(PP) micro-perforé, un film polyéthylène (PE) chargé et étiré, un film de polypropylène (PP) chargé et étiré, un film de copolymères polyéthylène(PE)/polypropylène(PP) chargé et étiré, un film thermoplastique polyuréthane extrudé (TPU) à base de polyéther, un film thermoplastique respirant à base polyuréthane et base polyéther-bloc amide, un film en polyamide 6-6 (PA 6-6) ou une combinaison desdits films.

Alternativement, ledit support est un support non tissé à base de fibres synthétiques choisies parmi le polyéthylène (PE), le polypropylène (PP), le polyéthylène téréphtalate (PET) et le polyamide (PA) ou une combinaison de celles-ci.

Par ailleurs, ledit support consiste de préférence en un film laminaire comprenant au moins :
- une couche supérieure constituée d'un film non tissé en polypropylène,
- une couche inférieure constituée d'un film non tissé en polypropylène, et
- une couche centrale s'étendant entre les couches supérieure et inférieure et constituée d'un film respirant.

Un autre objet de l'invention concerne un procédé de fabrication d'une membrane perméable à la vapeur d'eau auto-adhésive, destinée à être utilisée sur un bâtiment, comprenant un support perméable à l'air et à la vapeur d'eau et une couche adhésive sensible à la pression, perméable à l'air et à la vapeur d'eau, et solidaire de la face inférieure dudit support ; ledit procédé est remarquable en ce qu'il comporte une étape de dépôt d'une couche adhésive sensible à la pression et perméable à l'air et à la vapeur d'eau en emprisonnant des bulles de gaz entre le support et la couche adhésive.

De préférence, lesdites bulles de gaz emprisonnées entre le support et la couche adhésive présentent un diamètre inférieur à l'épaisseur de ladite couche adhésive.

Selon une première variante d'exécution du procédé suivant l'invention, l'étape de dépôt de la couche adhésive consiste au moins dans les étapes suivantes de :
- dépôt d'un adhésif acrylique sur un film protecteur siliconé,
- réticulation de l'adhésif, et
- de transfert de l'adhésif sur le support.

Selon une seconde variante d'exécution du procédé suivant l'invention, l'étape de dépôt de la couche adhésive consiste à déposer un adhésif acrylique sur le support.

De préférence, les bulles d'air présentent un diamètre inférieur ou égal à 50 µm et la couche adhésive présente une épaisseur inférieure ou égale à 200 µm, et de préférence, une épaisseur de 130 µm.

Par ailleurs, la couche adhésive présente une masse surfacique comprise entre 100 et 160 g/m² et, de préférence, une masse surfacique de 130 g/m².

Ladite couche adhésive est de préférence obtenue dans un adhésif sensible à la pression polaire, de préférence réticulé, et de préférence acrylique.

De préférence, ledit adhésif est un adhésif acrylique hotmelt réticulé par UV et tackifié.

Par ailleurs, le support consiste en un film de polyéthylène (PE) micro-perforé, un film de polypropylène (PP) micro-perforé, un film copolymère polyéthylène(PE)/polypropylène(PP) micro-perforé, un film polyéthylène (PE) chargé et étiré, un film de polypropylène (PP) chargé et étiré, un film de copolymères polyéthylène(PE)/polypropylène(PP) chargé et étiré, un film thermoplastique polyuréthane extrudé (TPU) à base de polyéther, un film thermoplastique respirant à base polyuréthane et base polyéther-bloc amide, un film en polyamide 6-6 (PA 6-6) ou une combinaison desdits films.

Alternativement, ledit support est un support non tissé à base de fibres synthétiques choisies parmi le polyéthylène (PE), le polypropylène (PP), le polyéthylène téréphtalate (PET) et le polyamide (PA) ou une combinaison de celles-ci.

Par ailleurs, ledit support consiste de préférence en un film laminaire comprenant au moins :
- une couche supérieure constituée d'un film non tissé en polypropylène,
- une couche inférieure constituée d'un film non tissé en polypropylène, et
- une couche centrale s'étendant entre les couches supérieure et inférieure et constituée d'un film respirant.

### Brève description des dessins

D'autres avantages et caractéristiques ressortiront mieux de la description qui va suivre, de plusieurs variantes d'exécution, données à titre d'exemples non limitatifs, de la membrane auto-adhésive et de son procédé de fabrication suivant l'invention, à partir des dessins annexés sur lesquels :
- la figure 1 est vue en coupe schématique d'un film pare-vapeur conforme à l'invention,
- la figure 2 est une photo de dessus du film pare-vapeur suivant l'invention,
- la figure 3 est une représentation schématique de la chaîne de production pour la mise en oeuvre du procédé de fabrication du film pare-vapeur conforme à l'invention,
- la figure 4 est une représentation schématique de la chaîne de production pour la mise en oeuvre d'une variante d'exécution du procédé de fabrication du film pare-vapeur conforme à l'invention.

### Mode de réalisation de l'invention

Par souci de clarté, dans la suite de la description, les mêmes éléments ont été désignés par les mêmes références aux différentes figures. De plus, les diverses vues ne sont pas tracées à l'échelle.

On décrira ci-après une membrane perméable à la vapeur d'eau auto-adhésive et son procédé de fabrication particulièrement destinée à la construction de bâtiments ; toutefois, il est bien évident que la membrane suivant l'invention trouvera de nombreuses autres applications sans pour autant sortir du cadre de l'invention.

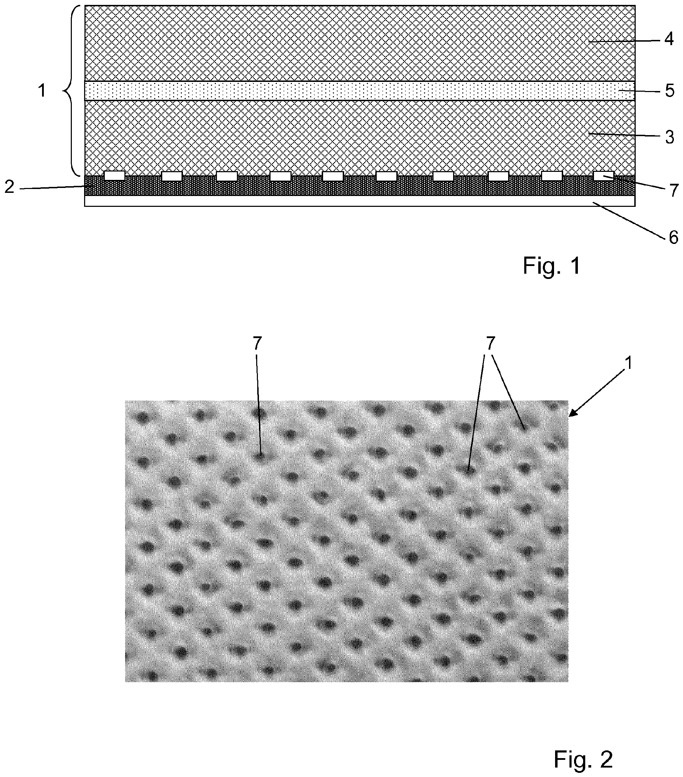

En référence à la figure 1, la membrane perméable à la vapeur d'eau suivant l'invention est constituée d'un support 1 perméable à l'air et à la vapeur d'eau et une couche adhésive 2 sensible à la pression, perméable à l'air et à la vapeur d'eau, et solidaire de la face inférieure dudit support 1. Ledit support 1 consiste en un film de polyéthylène (PE) micro-perforé, un film de polypropylène (PP) micro-perforé, un film copolymère polyéthylène(PE)/polypropylène(PP) micro-perforé, un film polyéthylène (PE) chargé et étiré, un film de polypropylène (PP) chargé et étiré, un film de copolymères polyéthylène(PE)/polypropylène(PP) chargé et étiré, un film thermoplastique polyuréthane extrudé (TPU) à base de polyéther, un film thermoplastique respirant à base polyuréthane et base polyéther-bloc amide, un film en polyamide 6-6 (PA 6-6) ou une combinaison desdits films. Le film thermoplastique polyuréthane extrudé (TPU) à base polyéther pourra consister par exemple dans un film TPU commercialisé par la société Epurex films de Bayer Company dans la gamme Walopur^{®} ou Platilon (réf. 2201 AU par exemple). Par ailleurs, le film thermoplastique respirant à base polyuréthane et base polyéther-bloc amide pourra consister par exemple dans un film commercialisé par la société Epurex films de Bayer company dans la gamme Walotex^{®} ou Pebatex^{®} (réf. 2202 AC et réf. M2234 par exemple).

Alternativement, le support 1 peut consister en un support non tissé à base de fibres synthétiques choisies parmi le polyéthylène (PE), le polypropylène (PP), le polyéthylène téréphtalate (PET) et le polyamide (PA) ou une combinaison de celles-ci. Ledit support non tissé pourra être obtenu par tout procédé bien connu de l'homme du métier, tel que des procédés par voie dite sèche ou des procédés par voie dite humide. Par exemple, le support non tissé pourra être obtenu par le procédé par voie sèche dit « spunbond » comprenant deux principales étapes, une première étape d'extrusion et de création des fils (spun) et une étape de liage des fibres ou consolidation (bond), ou par le procédé par voie sèche dit « air laid » qui consiste à amener et à faire passer les fibres à travers des cylindres rotatifs perforés ou des systèmes de distribution pour former un voile sur une toile transporteuse au moyen d'une caisse de distribution située au dessus d'une toile avec système de vide incorporé au dessous de la toile. Alternativement, le support non tissé pourra être obtenu par le procédé par voie humide dit « wetlaid » dans lequel les fibres utilisées sont dispersées, triturées, puis diluées avec une très grande quantité d'eau pour former une pâte contenant 0,1 à 0,25 g/l. de matière sèche, puis ladite pâte est envoyée sur une toile d'égouttage d'une unité de formation permettant de réaliser la formation du matelas fibreux ou voile par une formation immergée, et finalement un égouttage de l'eau sur des caisses aspirantes.

Selon une variante d'exécution préférée, en référence à la figure 1, ledit support 1 consiste en un film laminaire, i.e. un film multicouches, comprenant trois couches, une couche supérieure 3 constituée d'un film non tissé en polypropylène, une couche inférieure 4 constituée d'un film non tissé en polypropylène, et une couche centrale 5 s'étendant entre les couches supérieure 3 et inférieure 4 et constituée d'un film respirant, ledit film respirant pouvant consister dans l'un quelconque des films précédemment décrits.

De plus, la couche adhésive 2 consiste en un adhésif acrylique hotmelt réticulé par UV et tackifié et présente une masse surfacique comprise entre 100 et 160 g/m² et, de préférence, une masse surfacique de 130 g/m². Cette couche adhésive 2 présente une épaisseur inférieure ou égale à 200 µm, et de préférence, une épaisseur de 130 µm. Ladite couche adhésive 2 est obtenue dans un adhésif sensible à la pression, de préférence polaire, et de préférence réticulé. Par ailleurs, ledit adhésif est de préférence à base acrylique. Par exemple, ledit adhésif pourra consister dans un adhésif acrylique auto-réticulant en phase solvant commercialisé par la société Henkel corporation sous la référence LOCTITE DURO-TAK 222A, LOCTITE DURO-TAK 1847, LOCTITE DURO-TAK 737, LOCTITE DURO-TAK 3954, DUROTAK 380-1053, ou par la société AV Chemie sous la référence Polytex SP 2085.

Plus précisément, ledit adhésif pourra consister dans un adhésif acrylique auto-réticulant en phase solvant à base de copolymères d'acrylates (copolymères carboxylés à base des esters acryliques) obtenus par la polymérisation de monomères acryliques tels que : acrylate de méthyle, acrylate d'éthyle, acrylate de 2-éthylhexyle, acrylate de n-butyle, acrylate de 2-hydroxyéthyle, ou similaires. La réticulation pourra être obtenue par ajout de tout agent de réticulation bien connu de l'homme du métier tel qu'un chellate métallique ou l'acétylacétonate=tris (2,4-pentanedionato-O,O') d'aluminium par exemple.

On observera que la viscosité et le comportement rhéologique de l'adhésif pourront aisément être ajustés par les systèmes solvants hydrocarbures aromatique et aliphatique, tels que les solvants alcooliques (méthanol, éthanol, propanol 2), les solvants cétoniques (acétone, méthyléthylcétone, pentane-2,4 dione,), les solvants aromatiques (toluène), les solvants aliphatiques cycliques (cyclohexane, méthylcyclohexane), les solvants aliphatiques (hexane et isomères, n-heptane, octane et isomères), afin d'obtenir une viscosité Brookfield comprise entre 1000 mPa.s et 50000 mPa.s (LVT 3/12 rpm).

De préférence, ledit adhésif est un adhésif acrylique hotmelt réticulé par UV commercialisé par la société Basf sous la gamme Ac Resin^{®}, tackifié ou non avec des résines tackifiantes type esters de colophane hydrogénée (référence Foral 105^{E} commercialisée par la société Eastman) ou des résines hydrocarbonées telles que les résines commercialisées par la société Eastman sous la référence Kristalex F85.

On notera que tous ces adhésifs sont perméables à l'air et à la vapeur d'eau. En particulier, l'adhésif Ac Resin^{®} A 250 UV présente une perméabilité à la vapeur d'eau de 949 g/m²/24h.

Accessoirement, afin de protéger la couche adhésive 2, la membrane suivant l'invention comporte un film protecteur siliconé 6 ou similaire.

De plus, en référence aux figures 1 et 2, ladite membrane comporte des bulles de gaz 7 emprisonnées entre le film laminaire 1 et la couche adhésive 2, lesdites bulles de gaz 7 présentant un diamètre inférieur à l'épaisseur de ladite couche adhésive 2. De préférence, lesdites bulles de gaz 7 présentent un diamètre inférieur ou égal à 50 µm. On observera que la couche adhésive 2 présente une composition simple et peu onéreuse, stable dans le temps, et procure à l'ensemble de la membrane une perméance constante dans le temps. Les bulles de gaz 7 forment un tampon dans lequel la vapeur d'eau excédentaire peut être stockée puis relarguée au cours du temps à travers la couche adhésive 2. On observera que le gaz contenu dans les bulles est de préférence de l'air ; toutefois, il va de soi que ledit gaz pourra consister dans tout gaz neutre et/ou inerte, par exemple, sans sortir du cadre de l'invention.

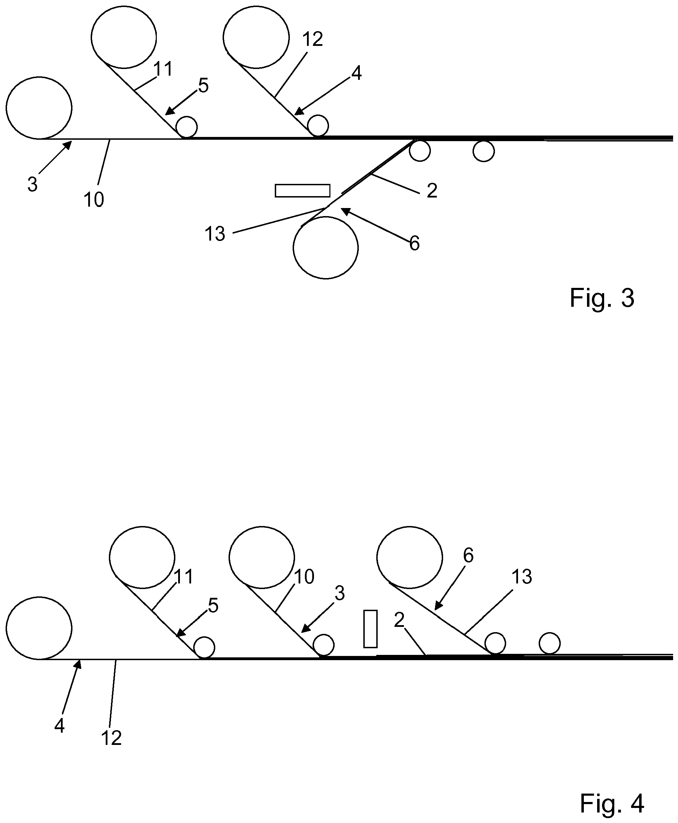

En référence à la figure 3, la membrane suivant l'invention est fabriquée à partir d'un film non tissé en polypropylène 10 formant la couche inférieure 3 du film laminaire 1 sur lequel est déposé un film respirant 11 formant la couche centrale 5, puis un film non tissé en polypropylène 12 formant la couche supérieure 4 du film laminaire 1 est déposé sur le film respirant 11. Une couche 2 d'une composition adhésive perméable à la vapeur d'eau est déposée sur un film protecteur siliconé 13, puis ladite couche adhésive 2 est réticulée avant d'être appliquée sur la face inférieure de la couche inférieure 3 en emprisonnant des bulles d'air entre ladite couche inférieure 3 et la couche adhésive 2. On notera que l'homme du métier adaptera la composition de la couche adhésive et la pression exercée lors de l'application de la couche adhésive 2 sur la couche inférieure 3 pour éviter de chasser l'air lors du transfert de la couche adhésive sur ladite couche inférieure 3.

Dans un procédé d'enduction directe, tel que décrit précédemment en référence à la figure 3, l'homme du métier choisira une masse adhésive présentant une viscosité comprise entre 1000 et 50000 mPas et/ou une vitesse d'enduction supérieure à 20 m/min pour éviter de chasser l'air entre le film laminaire 1 at la couche adhésive 2 et permettre la formation des bulles de gaz 7.

Selon une variante d'exécution, en référence à la figure 4, la membrane suivant l'invention est fabriquée à partir d'un film non tissé en polypropylène 12 formant la couche supérieure 4 du film laminaire 1 sur lequel est déposé un film respirant 11 formant la couche centrale 5, puis un film non tissé en polypropylène 10 formant la couche inférieure 3 du film laminaire 1 est déposé sur le film respirant 11. Une couche 2 d'une composition adhésive perméable à la vapeur d'eau est déposée sur la face supérieure de la couche inférieure 3 puis un film protecteur siliconé 13 est déposé sur la couche adhésive 2. On notera que l'homme du métier adaptera la viscosité et la température de la composition adhésive afin d'éviter de chasser l'air lors du dépôt de la couche adhésive 2 afin de permettre la formation de bulles d'air entre la couche inférieure 3 et la couche adhésive 2.

Par exemple, dans un procédé d'enduction du film laminaire 1, tel que décrit précédemment en référence à la figure 4, l'homme du métier choisira de préférence une pression de complexage sur le cylindre presseur inférieure à 5 bars et/ou une température du cylindre de pressage inférieure à 10°C, le cylindre presseur comprenant un revêtement en caoutchouc ou similaire présentant de préférence une dureté inférieure ou égale à 80 Shore A, pour éviter de chasser l'air et permettre la formation des bulles de gaz 7.

## Revendications

1. Membrane perméable à la vapeur d'eau auto-adhésive, destinée à être utilisée sur un bâtiment, comprenant un support (1) perméable à l'air et à la vapeur d'eau et une couche adhésive (2) sensible à la pression, perméable à l'air et à la vapeur d'eau, et solidaire de la face inférieure dudit support (1) ***caractérisée* en ce qu'**elle comporte des bulles de gaz (7) formant un tampon, qui sont emprisonnées entre le support (1) et la couche adhésive (2).

2. Membrane perméable à la vapeur d'eau auto-adhésive suivant la revendication 1 ***caractérisée* en ce que** lesdites bulles de gaz (7) présentent un diamètre inférieur à l'épaisseur de ladite couche adhésive (2).

3. Membrane perméable à la vapeur d'eau auto-adhésive suivant l'une quelconque des revendications 1 ou 2 ***caractérisée* en ce que** les bulles de gaz (7) présentent un diamètre inférieur ou égal à 50 µm.

4. Membrane perméable à la vapeur d'eau auto-adhésive suivant l'une quelconque des revendications 1 à 3 ***caractérisée* en ce que** la couche adhésive (2) présente une épaisseur inférieure ou égale à 200 µm.

5. Membrane perméable à la vapeur d'eau auto-adhésive suivant la revendication 4 ***caractérisée* en ce que** la couche adhésive (2) présente une épaisseur de 130 µm.

6. Membrane perméable à la vapeur d'eau auto-adhésive suivant l'une quelconque des revendications 1 à 5 ***caractérisée* en ce que** la couche adhésive (2) présente une masse surfacique comprise entre 100 et 160 g/m²et, de préférence, une masse surfacique de 130 g/m².

7. Membrane perméable à la vapeur d'eau auto-adhésive suivant l'une quelconque des revendications 1 à 6 ***caractérisée* en ce que** la couche adhésive (2) est obtenue dans un adhésif sensible à la pression acrylique hotmelt réticulé par UV et tackifié.

8. Membrane perméable à la vapeur d'eau auto-adhésive suivant l'une quelconque des revendications 1 à 7 ***caractérisée* en ce que** le support (1) consiste en un film de polyéthylène (PE) micro-perforé, un film de polypropylène (PP) micro-perforé, un film copolymère polyéthylène(PE)/polypropylène(PP) micro-perforé, un film polyéthylène (PE) chargé et étiré, un film de polypropylène (PP) chargé et étiré, un film de copolymères polyéthylène(PE)/polypropylène(PP) chargé et étiré, un film thermoplastique polyuréthane extrudé (TPU) à base de polyéther, un film thermoplastique respirant à base polyuréthane et base polyéther-bloc amide, un film en polyamide 6-6 (PA 6-6) ou une combinaison desdits films.

9. Membrane perméable à la vapeur d'eau auto-adhésive suivant l'une quelconque des revendications 1 à 8 ***caractérisée* en ce que** ledit support (1) est un support non tissé à base de fibres synthétiques choisies parmi le polyéthylène (PE), le polypropylène (PP), le polyéthylène téréphtalate (PET) et le polyamide (PA) ou une combinaison de celles-ci.

10. Membrane perméable à la vapeur d'eau auto-adhésive suivant l'une quelconque des revendications 1 à 9 ***caractérisée* en ce que** le support (1) consiste en un film laminaire comprenant au moins :
- une couche supérieure (4) constituée d'un film non tissé en polypropylène,
- une couche inférieure (3) constituée d'un film non tissé en polypropylène, et
- une couche centrale (5) s'étendant entre les couches supérieure (4) et inférieure (3) et constituée d'un film respirant.

11. Procédé de fabrication d'une membrane perméable à la vapeur d'eau auto-adhésive, destinée à être utilisée sur un bâtiment, comprenant un support (1) perméable à l'air et à la vapeur d'eau et une couche adhésive (2) sensible à la pression, perméable à l'air et à la vapeur d'eau, et solidaire de la face inférieure dudit support (1) ***caractérisé* en ce qu'**il comporte une étape de dépôt d'une couche adhésive (2) sensible à la pression et perméable à l'air et à la vapeur d'eau en emprisonnant des bulles de gaz (7) entre le support (1) et la couche adhésive (2), lesdites bulles de gaz (7) présentant un diamètre inférieur à l'épaisseur de ladite couche adhésive (2).

12. Procédé suivant la revendication 11 ***caractérisé* en ce que** l'étape de dépôt de la couche adhésive (2) consiste au moins dans les étapes suivantes de :
- dépôt d'un adhésif acrylique sur un film protecteur siliconé (13),
- réticulation de l'adhésif, et
- de transfert de l'adhésif sur le support (1).

13. Procédé suivant la revendication 11 ***caractérisé* en ce que** l'étape de dépôt de la couche adhésive (2) consiste à déposer à chaud un adhésif acrylique sur le support (1).

## Patentansprüche

1. Selbstklebende, wasserdampfdurchlässige Membran zur Verwendung an einem Gebäude, umfassend einen luft- und wasserdampfdurchlässigen Träger (1) und eine druckempfindliche Klebeschicht (2), die luft- und wasserdampfdurchlässig und fest mit der Unterseite des Trägers (1) verbunden ist, **dadurch *gekennzeichnet,* dass** sie pufferbildende Gasblasen (7) aufweist, die zwischen dem Träger (1) und der Klebeschicht (2) eingeschlossen sind.

2. Selbstklebende wasserdampfdurchlässige Membran nach Anspruch 1, **dadurch *gekennzeichnet,* dass** die Gasblasen (7) einen Durchmesser aufweisen, der kleiner ist als die Dicke der Klebeschicht (2).

3. Selbstklebende wasserdampfdurchlässige Membran nach einem der Ansprüche 1 oder 2, **dadurch *gekennzeichnet,* dass** die Gasblasen (7) einen Durchmesser von weniger als oder gleich 50 µm aufweisen.

4. Selbstklebende, wasserdampfdurchlässige Membran nach einem der Ansprüche 1 bis 3, **dadurch *gekennzeichnet,* dass** die Klebeschicht (2) eine Dicke von weniger als oder gleich 200 µm aufweist.

5. Selbstklebende, wasserdampfdurchlässige Membran nach Anspruch 4, **dadurch *gekennzeichnet,* dass** die Klebeschicht (2) eine Dicke von 130 µm aufweist.

6. Selbstklebende, wasserdampfdurchlässige Membran nach einem der Ansprüche 1 bis 5, **dadurch *gekennzeichnet,* dass** die Klebeschicht (2) ein Flächengewicht zwischen 100 und 160 g/m² und vorzugsweise ein Flächengewicht von 130 g/m² aufweist.

7. Selbstklebende, wasserdampfdurchlässige Membran nach einem der Ansprüche 1 bis 6, **dadurch *gekennzeichnet,* dass** die Klebeschicht (2) in einem druckempfindlichen UV-vernetzten, tackifizierten Acryl-Hotmelt-Klebstoff erhalten wird.

8. Selbstklebende, wasserdampfdurchlässige Membran nach einem der Ansprüche 1 bis 7, **dadurch *gekennzeichnet,* dass** der Träger (1) aus einem mikroperforierten Polyethylenfilm (PE), einem mikroperforierten Polypropylenfilm (PP), einem mikroperforierten Polyethylen(PE)/Polypropylen(PP)-Copolymerfilm, einem beladenen und gestreckten Polyethylenfilm (PE), einem beladenen und gestreckten Polypropylenfilm (PP), einem beladenen und gestreckten Polyethylen(PE)/Polypropylen(PP)-Copolymerfilm, einem extrudierten thermoplastischen Polyurethanfilm (TPU) auf Polyetherbasis, einem atmungsaktiven thermoplastischen Film auf Polyurethanbasis und Polyetherblockamidbasis, einem Polyamid-6-6-Film (PA-6-6) oder einer Kombination dieser Filme besteht.

9. Selbstklebende, wasserdampfdurchlässige Membran nach einem der Ansprüche 1 bis 8, **dadurch *gekennzeichnet,* dass** der Träger (1) ein nicht gewebter Träger auf der Basis von synthetischen Fasern ist, die aus Polyethylen (PE), Polypropylen (PP), Polyethylenterephthalat (PET) und Polyamid (PA) oder einer Kombination davon ausgewählt sind.

10. Selbstklebende, wasserdampfdurchlässige Membran nach einem der Ansprüche 1 bis 9, **dadurch *gekennzeichnet,* dass** der Träger (1) aus einem laminaren Film besteht, der mindestens umfasst:
- eine obere Schicht (4), die aus einem nicht gewebten Polypropylenfilm besteht,
- eine untere Schicht (3), die aus einem nicht gewebten Polypropylenfilm besteht, und
- eine mittlere Schicht (5), die sich zwischen der oberen (4) und der unteren (3) Schicht erstreckt und aus einem atmungsaktiven Film besteht.

11. Verfahren zur Herstellung einer selbstklebenden, wasserdampfdurchlässigen Membran, die zur Verwendung an einem Gebäude bestimmt ist und einen luft- und wasserdampfdurchlässigen Träger (1) und eine druckempfindliche, luft- und wasserdampfdurchlässige Klebeschicht (2) umfasst, und fest mit der Unterseite des Trägers (1) verbunden ist, **dadurch *gekennzeichnet,* dass** es einen Schritt der Ablagerung einer druckempfindlichen, luft- und wasserdampfdurchlässigen Klebeschicht (2) durch Einschließen von Gasblasen (7) zwischen dem Träger (1) und der Klebeschicht (2) umfasst, wobei die Gasblasen (7) einen Durchmesser aufweisen, der kleiner ist als die Dicke der Klebeschicht (2).

12. Verfahren nach Anspruch 11, **dadurch *gekennzeichnet,* dass** der Schritt der Ablagerung der Klebeschicht (2) mindestens aus den folgenden Schritten besteht:
- Ablagerung eines Acrylklebstoffs auf einem silikonisierten Schutzfilm (13),
- Vernetzung des Klebstoffs und
- Übertragung des Klebstoffs auf den Träger (1).

13. Verfahren nach Anspruch 11, **dadurch *gekennzeichnet,* dass** der Schritt der Ablagerung der Klebeschicht (2) das Heißablagern eines Acrylklebstoffs auf den Träger (1) umfasst.

## Claims

1. Self-adhesive membrane permeable to water vapor for use on a building comprising a support (1) that is permeable to air and water vapor, and a pressure-sensitive adhesive layer (2) that is permeable to air and water vapor, and is secured to the underside of the support (1), ***characterized* in that** it comprises gas bubbles (7) forming a buffer, which are trapped between the support (1) and the adhesive layer (2).

2. Self-adhesive membrane permeable to water vapor according to claim 1, ***characterized* in that** the gas bubbles (7) have a diameter less than the thickness of the adhesive layer (2).

3. Self-adhesive membrane permeable to water vapor according to any one of the claims 1 or 2, ***characterized* in that** the gas bubbles (7) have a diameter less than or equal to 50 µm.

4. Self-adhesive membrane permeable to water vapor according to any one of the claims 1 to 3, ***characterized* in that** the adhesive layer (2) has a thickness less than or equal to 200 µm.

5. Self-adhesive membrane permeable to water vapor according to claim 4, ***characterized* in that** the adhesive layer (2) has a thickness of 130 µm.

6. Self-adhesive membrane permeable to water vapor according to any one of the claims 1 to 5, ***characterized* in that** the adhesive layer (2) has an area density of between 100 and 160 g/m² and preferably an area density of 130 g/m².

7. Self-adhesive membrane permeable to water vapor according to any one of the claims 1 to 6, ***characterized* in that** the adhesive layer (2) is obtained in a UV-crosslinked tackified acrylic hot-melt pressure-sensitive adhesive.

8. Self-adhesive membrane permeable to water vapor according to any one of the claims 1 to 7, ***characterized* in that** the support (1) consists of a micro-perforated polyethylene (PE) film, a micro-perforated polypropylene film (PP), a micro-perforated polyethylene (PE)/polypropylene (PP) copolymer film, a stretched polyethylene (PE) film, a stretched polypropylene (PP) film, a stretched polyethylene copolymer film (PE)/polypropylene (PP), a polyether-based extruded polyurethane (TPU) thermoplastic film, a polyurethane-based breathable thermoplastic film and a polyether-block amide base, a 6-6 polyamide film (PA 6-6), or a combination of these films.

9. Self-adhesive membrane permeable to water vapor according to any one of the claims 1 to 8, ***characterized* in that** the support (1) is a nonwoven support based on synthetic fibers selected from polyethylene (PE), polypropylene (PP), polyethylene terephthalate (PET) and polyamide (PA), or a combination thereof.

10. Self-adhesive membrane permeable to water vapor according to any one of the claims 1 to 9, ***characterized* in that** the support (1) consists of a laminar film comprising at least:
- an upper layer (4) consisting of a nonwoven polypropylene film,
- a lower layer (3) consisting of a nonwoven polypropylene film, and
- a central layer (5) extending between the upper (4) and lower (3) layers and consisting of a breathable film.

11. Method of manufacturing a self-adhesive membrane permeable to water vapor for use on a building comprising a support (1) that is permeable to air and water vapor and a pressure-sensitive adhesive layer (2) that is permeable to air and water vapor, and is integral with the underside of the support (1), ***characterized* in that** it comprises a step of depositing a pressure-sensitive adhesive layer (2) that is permeable to air and water vapor by trapping gas bubbles (7) between the support (1) and the adhesive layer (2), wherein the gas bubbles (7) have a diameter less than the thickness of the adhesive layer (2).

12. Method according to claim 11, ***characterized in* that** the step of depositing the adhesive layer (2) consists at least of the following steps:
- depositing an acrylic adhesive on a protective silicone film (13),
- crosslinking the adhesive, and
- transferring the adhesive on the support (1).

13. Method according to claim 11, ***characterized in* that** the step of depositing the adhesive layer (2) consists of hot depositing an acrylic adhesive on the support (1).
